# DEMANDE DE BREVET EUROPEEN

(11) **EP 1 079 348 A2**
(43) Date de publication de la demande: **28.02.2001**
(21) Numéro de dépôt: 00402265.3
(22) Date de dépôt: 10.08.2000
(51) Int. Cl.: G07F 19/00

(54) **Procédé de paiement en ligne**

(30) Priorité: 27.08.1999 FR 9910867
(71) Demandeur: Creanet, 75011 Paris (FR)
(72) Inventeur: Sarver, Laurent, 75016 Paris (FR); Fouche, Bernard, 75013 Paris (FR)
(74) Mandataire: de Roquemaurel, Bruno

(57) **Abrégé**

Un procédé de paiement de service offert à un client par un fournisseur de service, le client étant équipé d'un calculateur (21) communiquant avec un fournisseur de service (10) par l'intermédiaire d'un premier réseau (1) de transmission de données numériques, le procédé comprenant : la connexion du calculateur à un serveur de paiement (12) par l'intermédiaire d'un second réseau, le serveur de paiement étant rémunéré par un opérateur du second réseau en fonction des communications qui lui sont destinées, la transmission par le serveur de paiement d'un message au calculateur et au fournisseur de service, ce message contenant un identifiant du client et le montant débité, la réception par le calculateur du message émis par le serveur de paiement, et la demande d'accès par le calculateur au fournisseur de service (10) au service demandé.

## Description

La présente invention concerne un procédé de paiement de service offert en ligne par un fournisseur de service à un client, via un réseau de transmission de données.

Actuellement, de nombreux services sont proposés sur le réseau Internet par des fournisseurs de services. Pour effectuer le paiement de ces services, plusieurs moyens sont utilisés. Un premier moyen consiste pour l'utilisateur de ces services à fournir des informations, en principe secrètes, concernant sa carte bancaire, telles que le numéro et la date de validité de cette dernière.

Même si l'on a prévu des moyens de transmission sécurisés, ce système présente un risque pour l'utilisateur dans la mesure où ces informations peuvent être piratées et utilisées pour débiter frauduleusement le compte bancaire de celui-ci.

Par ailleurs, ce système n'est pas adapté au paiement de l'accès à un service de bases de données dans le cas où le fournisseur de service ne souhaiterait vendre l'accès que quelques francs par consultation. En outre, en acceptant le paiement par carte bancaire, le fournisseur de service se trouve confronté à la législation de vente par correspondance qui donne au client la possibilité de contester son achat pendant un délai de plusieurs mois après la facturation. Ceci constitue une insécurité financière pour le fournisseur de services dans la mesure où il ne peut considérer que la transaction est définitivement réalisée qu'après l'expiration de ce délai.

Pour tenter de supprimer ces inconvénients, certains fournisseurs de services ont mis en place un système d'abonnement consistant à demander à chaque utilisateur de fournir son identification (nom et adresse), et éventuellement de procéder à un dépôt d'argent minimum sur un compte qui lui est attribué, en échange de quoi, il reçoit un code d'accès et un mot de passe qui doivent être fournis par l'utilisateur pour accéder au service en question. Cette solution ne permet pas à un utilisateur non abonné d'accéder instantanément aux service proposé. Elle n'élimine pas les risques de piratage, puisque le code d'accès et le mot de passe doivent être transmis par le réseau à chaque accès au service.

Le but de l'invention est de pallier les inconvénients ci-dessus au moyen d'un procédé de paiement qui assure une sécurité totale aussi bien pour le client que pour le fournisseur de service, le client étant équipé d'un calculateur communiquant avec un fournisseur de service par l'intermédiaire d'un premier réseau de transmission de données numériques.

Selon l'invention, ce procédé est caractérisé en ce que, le calculateur ayant également accès à un second réseau de transmission de données, le procédé comprend les étapes suivantes :
- la connexion du calculateur à un serveur de paiement par l'intermédiaire du second réseau, le serveur de paiement étant rémunéré par un opérateur du second réseau en fonction des communications qui lui sont destinées,
- la transmission par le serveur de paiement d'un message d'accusé de réception au calculateur et au fournisseur de service, ce message contenant un identifiant du client et l'indication que le client est débité d'un montant correspondant à un service demandé,
- la réception par le calculateur du message d'accusé de réception émis par le serveur de paiement, et
- l'émission par le calculateur au fournisseur de service, d'un message de demande d'accès au service demandé contenant l'identifiant du client, cet accès étant autorisé si l'identifiant reçu dans le message correspond à un identifiant reçu du serveur de paiement, et si le montant correspond au prix du service demandé.

Le procédé selon l'invention permet ainsi de simplifier et de sécuriser la transaction financière entre le client et le fournisseur de service, mêmes si les montants à payer par le client sont très faibles, la transaction de paiement étant totalement transparente pour le client qui n'est plus obligé de fournir les coordonnées de sa carte de crédit.

De préférence, ce procédé comprend en outre le téléchargement d'un programme par le fournisseur de service sur le calculateur, et l'exécution de ce programme par le calculateur, ce programme effectuant la connexion du calculateur au serveur de paiement, et la gestion des échanges entre le calculateur et celui-ci et de l'accès au service demandé.

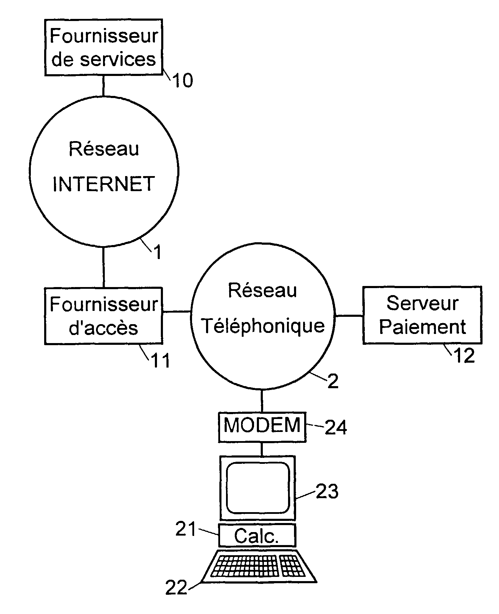

D'autres caractéristiques et avantages de l'invention ressortiront de la description qui va suivre, prise à titre d'exemple non limitatif, en référence à la figure unique, annexée, illustrant schématiquement l'architecture d'un système de paiement permettant la mise en oeuvre du procédé selon l'invention.

La figure représente un système de paiement de services, mis en oeuvre par le procédé selon l'invention, ces services consistant par exemple en la fourniture d'informations payantes, effectuée par un fournisseur de service 10 à un client, via un réseau de transmission 1.

Dans ce système, le client est équipé d'un terminal de télécommunication, par exemple comprenant un calculateur 21 équipé d'un écran 23 et d'un clavier 22, le calculateur 21 étant relié via un modem 24 à un réseau de télécommunication 2.

A l'heure actuelle, les fournisseurs de service proposent des services accessibles par le réseau Internet, tandis que la majorité des utilisateurs sont reliés au réseau Internet 1, par l'intermédiaire du réseau téléphonique 2 et d'un fournisseur d'accès 11.

Dans ce contexte, pour accéder au service, le client doit tout d'abord appeler son fournisseur d'accès 11 en déclenchant une procédure de connexion exécutée par le modem piloté par le calculateur 21, cette procédure comprenant la composition d'un numéro de téléphone correspondant à celui du fournisseur d'accès qui permet d'ouvrir un canal de transmission de données dans le réseau téléphonique publique entre le modem 24 et le fournisseur d'accès 11, celui-ci attribuant ensuite au calculateur 21 un canal de transmission de données entre le réseau téléphonique 2 et le réseau Internet 1. Le client peut ensuite accéder au site du fournisseur de service 10 en transmettant l'adresse Internet de celui-ci au fournisseur d'accès 11.

Selon l'invention, l'accès d'un client au site du fournisseur de service 10 déclenche le téléchargement du site du fournisseur de service vers le calculateur 21 du client, d'un programme qui est exécuté par le calculateur 21.

Ce programme effectue tout d'abord la commande du modem 24 pour qu'il se déconnecte du fournisseur d'accès 11 et qu'il compose le numéro de téléphone d'un abonné au réseau téléphonique jouant le rôle de serveur de paiement 12, qui est à cet effet enregistré auprès de l'opérateur du réseau téléphonique 2 pour que tous les appels qui lui sont destinés soient surtaxés, la surtaxe étant reversée par l'opérateur à l'abonné. Le serveur de paiement 12 est utilisé pour gérer la transaction de paiement entre le fournisseur de service 10 et le client, dans le cadre d'un accord avec le fournisseur de service.

La surtaxe appliquée par l'opérateur du réseau 2 à la communication avec le serveur de paiement 12 peut être calculée à partir d'un montant forfaitaire appliqué à l'appel et/ou d'un montant qui augmente en fonction de la durée de la communication.

En appelant ce serveur de paiement 12 qui est rémunéré par l'opérateur du réseau téléphonique, le client sera débité automatiquement du montant de l'appel dans sa facture téléphonique établie par l'opérateur téléphonique.

Lorsque le coût de la communication avec le serveur de paiement correspond au prix du service demandé par le client sur le site du fournisseur de service 10, le programme téléchargé commande le modem pour interrompre la communication avec le serveur de paiement 12, et rétablir la liaison avec le fournisseur de service 10, par l'intermédiaire du réseau téléphonique 2, du fournisseur d'accès 11 et du réseau Internet 1.

De cette manière, le client d'un service peut payer de petites sommes pour accéder à ce service, et ce sans avoir à transmettre des informations confidentielles telles que des références de carte bancaire ou un mot de passe sur le réseau Internet.

Pour le paiement de sommes plus importantes, le serveur de paiement peut être enregistré auprès de l'opérateur téléphonique pour prélever un certain montant à chaque connexion, le programme pilotant le modem 24 commandant alors une connexion avec le serveur de paiement 12, puis une déconnexion successive, plusieurs fois, jusqu'à ce que le montant à payer par le client soit atteint.

Pour une plus grande sécurité et souplesse de fonctionnement, on peut prévoir que le programme téléchargé identifie le client en lui attribuant automatiquement un code d'identification. Lorsque la connexion entre le serveur de paiement 12 et le calculateur 21 est établie, le programme transmet ce code d'identification au serveur de paiement 12, lequel peut stocker les informations relatives à la transaction, c'est-à-dire le code d'identification reçu et le montant de la surtaxe correspondant à l'appel ou aux appels au cours desquels le code d'identification a été transmis. Ces informations peuvent être transmises par ailleurs par le serveur de paiement au fournisseur de service 10. Elles peuvent également être transmises au calculateur sous la forme d'un message d'accusé de réception, le programme téléchargé commandant alors l'affichage sur l'écran 23 d'un message indiquant que la transaction s'est effectuée correctement et le montant crédité au client.

Lorsque le programme téléchargé établit à nouveau la connexion entre le calculateur 21 et le fournisseur de service 10, il transmet le code d'identification du client à celui-ci, ce qui permet au fournisseur de service de déterminer quel montant a payé le client en question et donc quel crédit dispose le client auprès du fournisseur de service.

Notons qu'un même client peut accéder plusieurs fois au fournisseur de service et donc qu'à chaque accès, on lui attribue un nouveau code d'identification.

Toutefois, si un client n'a pas consommé tout son crédit auprès du fournisseur de service au cours d'une communication, on peut prévoir que le programme téléchargé mémorise le code d'identification dans la mémoire du calculateur 21, et qu'à la communication suivante avec le fournisseur de service, le programme téléchargé recherche au préalable dans la mémoire du calculateur le dernier code d'identification enregistré et interroge le fournisseur de service 10 pour déterminer si un crédit non épuisé est associé à ce code d'identification. Si tel est le cas, le programme donne au client accès au service qui est dans ce cas autorisé par le fournisseur de service, jusqu'à épuisement du crédit.

On peut également prévoir que le programme téléchargé demande au client de définir le montant du crédit dont il souhaite bénéficier, ou bien par exemple le nombre de connexions au fournisseur de service 10, ou encore l'étendue du service dont il souhaite bénéficier.

D'une manière plus précise, le programme peut comprendre les étapes suivantes :
- la commande du modem 24 pour qu'il se déconnecte du fournisseur de service 10 ;
- la commande du modem 24 pour qu'il connecte l'ordinateur 21 au serveur de paiement 12 ;
- la commande du modem 24 pour envoyer au serveur de paiement 12 un message contenant une séquence numérique permettant d'identifier le compte du client à créditer ;
- l'attente d'un message d'accusé de réception transmis par le serveur de paiement 12 à la réception de ladite séquence d'identification ; et
- si le modem 24 détecte ledit message d'accusé de réception, révélant que la transaction s'est déroulée correctement, l'indication au client que son compte est crédité d'une valeur correspondant au service demandé.

Le procédé selon l'invention peut comprendre une étape préalable d'introduction par le client de la référence d'un service qu'il souhaite utiliser ou d'un montant qu'il souhaite consommer lors de l'utilisation de services.

Par ailleurs, il est à noter que la séquence d'identification du compte du client peut être attribuée non pas par le programme téléchargé ou par le fournisseur de services, mais par le serveur de paiement.

Dans un mode particulier de réalisation de l'invention, les messages échangés entre le modem 24 et le serveur de paiement 12 sont émis sous la forme de séquences DTMF prédéterminées (Dual-tone Modulation Frequency).

Le réseau téléphonique utilisé peut bien entendu être un réseau filaire ou radioélectrique cellulaire.

Si le système qui vient d'être décrit fait intervenir un réseau téléphonique, il peut bien entendu faire intervenir tout autre réseau, dans lequel les communications sont facturées à un client en fonction du numéro de correspondant appelé, et éventuellement en fonction de la durée de la communication, et dans lequel certains abonnés peuvent être rémunérés par l'opérateur du réseau qui applique alors une surtaxe aux clients appelant ces abonnés, la surtaxe étant prélevée par l'opérateur et reversée à ces derniers.

De même, le client souhaitant bénéficier de services en ligne peut avoir un accès direct (sans passer par l'intermédiaire d'un fournisseur d'accès) au réseau Internet par lequel il accède aux services en question. Dans ce cas, il doit également avoir accès à un second réseau dans lequel certains abonnés peuvent être rémunérés par l'opérateur du réseau en fonction des communications qui leur sont destinées, cet accès étant obtenu par le même modem ou en utilisant un autre modem adapté à ce réseau. Dans ce dernier cas, il n'est pas nécessaire de se déconnecter du premier réseau.

## Revendications

1. Procédé de paiement d'un service offert à un client par un fournisseur de service, un client étant équipé d'un calculateur (21) communiquant avec un fournisseur de service (10) par l'intermédiaire d'un premier réseau (1) de transmission de données numériques,
caractérisé en ce que, le calculateur (21) ayant également accès à un second réseau (2) de transmission de données, le procédé comprend les étapes suivantes :
- la connexion du calculateur à un serveur de paiement (12) par l'intermédiaire du second réseau, le serveur de paiement étant rémunéré par un opérateur du second réseau en fonction des communications qui lui sont destinées,
- la transmission par le serveur de paiement d'un message d'accusé de réception au calculateur et au fournisseur de service, ce message contenant un identifiant du client et l'indication que le client est débité d'un montant correspondant à un service demandé,
- la réception par le calculateur du message d'accusé de réception émis par le serveur de paiement, et
- l'émission par le calculateur au fournisseur de service (10), d'un message de demande d'accès au service demandé contenant l'identifiant du client, cet accès étant autorisé par le fournisseur de service si l'identifiant reçu dans le message correspond à un identifiant reçu du serveur de paiement, et si le montant correspond au prix du service demandé.

2. Procédé selon la revendication 1, caractérisé en ce qu'il comprend en outre le téléchargement d'un programme par le fournisseur de service (10) sur le calculateur (21), et l'exécution de ce programme par le calculateur, ce programme effectuant la connexion du calculateur au serveur de paiement (12), et la gestion des échanges entre le calculateur et celui-ci et de l'accès au service demandé.

3. Procédé selon la revendication 2, caractérisé en ce que, le premier réseau (1) étant accessible au calculateur (21) par l'intermédiaire du second réseau (2), ledit programme commande la déconnexion préalable du calculateur du premier réseau pour se connecter au serveur de paiement (12).

4. Procédé selon l'une des revendications 1 à 3, caractérisé en ce que, le serveur de paiement (12) étant crédité à chaque accès par l'opérateur du réseau d'un montant forfaitaire, le procédé comprend une série de connexions et de déconnexions successives du calculateur (21) au serveur de paiement jusqu'à ce que le montant à débiter soit atteint.

5. Procédé selon l'une des revendications 1 à 4, caractérisé en ce que l'identifiant du client est attribué par le fournisseur de service (10) au calculateur (21), lequel transmet cet identifiant au serveur de paiement (12).

6. Procédé selon l'une des revendications 1 à 5, caractérisé en ce qu'à la réception du message d'accusé de réception, il comprend en outre l'indication par le calculateur (21) au client que son paiement du service demandé a été pris en compte pour accéder au service demandé.

7. Procédé selon l'une des revendications 1 à 6, caractérisé en ce qu'il comprend la mémorisation par le calculateur (21) de l'identifiant reçu et la transmission de cet identifiant au fournisseur de services (10) lors d'un accès ultérieur, le fournisseur de service mémorisant en association avec chaque identifiant attribué à un client un montant de crédit restant disponible, et autorisant un nouvel accès au service demandé si ce montant est suffisant par rapport au service demandé.

8. Procédé selon l'une des revendications 1 à 7, caractérisé en ce que le premier réseau (1) est le réseau Internet.

9. Procédé selon l'une des revendications 1 à 8, caractérisé en ce que le second réseau (2) est un réseau téléphonique.
